# EUROPÄISCHE PATENTANMELDUNG

(11) **EP 4 362 181 A1**
(43) Veröffentlichungstag der Anmeldung: **01.05.2024**
(21) Anmeldenummer: 22203859.8
(22) Anmeldetag: 26.10.2022
(51) Int. Cl.: H01M 50/152, H01M 50/167, H01M 50/186, H01M 50/193, H01M 50/559

(54) **ANORDNUNG ZUR MECHANISCHEN ENTKOPPLUNG VON POLKAPPEN EINER BATTERIEZELLE**

(71) Anmelder: Cellforce Group GmbH, 72072 Tübingen (DE)
(72) Erfinder: Gräf, Jürgen, 72072 Tübingen (DE)

(57) **Zusammenfassung**

Die Erfindung betrifft eine Anordnung (10), insbesondere eine Polanordnung einer elektrochemischen Zelle (100), aufweisend einen endseitigen Gehäuseabschnitt (11), in welchem eine Polkappe (12) mit mindestens einer Kontaktierungsplatte (13) angeordnet ist, wobei die Polkappe (12) an einem Polkappenfuß (42) durch eine umlaufende Verschlussplatte (17) zumindest bereichsweise gegenüber dem Gehäuseabschnitt (11) arretiert ist, wobei zwischen der Polkappe (12) und der Verschlussplatte (13) ein umlaufender Spalt ausgebildet ist, welcher abgedichtet ist, wobei die Anordnung (10) ein Kopplungselement (30) aufweist, welches dazu eingerichtet ist, die Kontaktierungsplatte (13) und/oder die Polkappe (12) mechanisch direkt oder indirekt mit der Verschlussplatte (17) und/oder dem Gehäuseabschnitt (11) zu koppeln. Des Weiteren betrifft die Erfindung eine elektrochemische Zelle (100).

## Beschreibung

Die Erfindung betrifft eine Anordnung, insbesondere eine Polanordnung einer elektrochemischen Zelle bzw. Batteriezelle, aufweisend einen endseitigen bzw. stirnseitigen Gehäuseabschnitt, in welchem eine Polkappe mit mindestens einer Kontaktierungsplatte angeordnet ist. Des Weiteren betrifft die Erfindung eine elektrochemische Zelle mit einer derartigen Anordnung.

Der Aufbau von Batteriesystemen erfordert eine Vielzahl von Batteriezellen, die auch zu Batteriemodulen aus mehreren Batteriezellen zusammengefasst sein können. Für die elektrische Anbindung der Batteriezellen, beispielsweise in Form von Li-Ionen-Zellen, ist eine zuverlässige und über eine lange Zeitdauer haltbare, elektrische Verbindung zwischen den Polen bzw. Polkappen und den Stromschienen oder Kabeln erforderlich. Hierbei werden viele Komponenten elektrisch und mechanisch miteinander gekoppelt, die in ihrer Form und Abmessung von Fertigungstoleranzen beeinträchtigt sind. Aus diesem Grund sind bereits Batteriezellen mit Polkappen bekannt, die randseitige oder stirnseitige Kontaktierungsplatten aufweisen.

Derartige Kontaktierungsplatten weisen federnde Abschnitte auf, um einen dauerhaft konstanten Anpressdruck zur Minimierung von Kontaktwiderständen auszuüben. Problematisch bei der Verwendung von Kontaktierungsplatten ist jedoch die mechanische Weiterleitung des Anpressdrucks auf die Polkappen und damit auf die Dichtungen, welche die Polkappe gegenüber einem Zellengehäuse abdichtet. Die Dichtungen sind üblicherweise durch Spritzgussverfahren in einen Spalt zwischen einer Polkappe und dem Zellengehäuse eingebracht und kleben somit an den Oberflächen der Polkappe und des Zellgehäuses. Je nach Ausgestaltung können auch Verbindungsplatten verwendet werden, um den Abstand zwischen dem Zellgehäuse und der Polkappe zu überbrücken. Die Dichtung kann in einem derartigen Fall zwischen der Polkappe und der Verbindungsplatte angeordnet sein. Durch den konstanten Anpressdruck wird die Dichtung durch die Polkappe in Richtung des Zellgehäuses gedrückt und somit auseinander gezogen. Diese Einwirkung auf die Dichtung kann die Klebewirkung der Dichtung beeinträchtigen und langfristig in Leckagen der Elektrolytlösung resultieren.

Die vorliegende Erfindung hat daher die Aufgabe, eine Anordnung zur mechanischen Überbrückung von Dichtungen zwischen den Polkappen und dem Gehäuse bzw. einer gehäuseseitigen Verschlussplatte zu schaffen. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird eine Anordnung, insbesondere eine Polanordnung einer elektrochemischen Zelle bzw. Batteriezelle, bereitgestellt. Die Anordnung weist einen endseitigen bzw. stirnseitigen Gehäuseabschnitt auf, in welchem eine Polkappe mit einer Kontaktierungsplatte angeordnet ist.

Die zumindest eine Kontaktierungsplatte kann beispielsweise auf einer Stirnseite der Polkappe positioniert sein und diese randseitig oder seitlich überragen. Insbesondere ist die Kontaktierungsplatte dazu eingerichtet, fertigungstechnische Toleranzen und Abweichungen federnd auszugleichen und zu überbrücken. Hierzu kann die Kontaktierungsplatte federnde Abschnitte aufweisen, welche seitlich und/oder stirnseitig von der Polkappe abstehen.

Weiterhin ist die Polkappe an einem Polkappenfuß durch eine umlaufende Verschlussplatte zumindest bereichsweise gegenüber dem Gehäuseabschnitt arretiert. Zwischen der Polkappe und der Verschlussplatte ist ein umlaufender Spalt ausgebildet, welcher gegenüber einer Umgebung bzw. Außenumgebung der Anordnung abgedichtet ist. Bevorzugterweise ist ein Kopplungselement vorgesehen, welches dazu eingerichtet ist, die Kontaktierungsplatte und/oder die Polkappe mechanisch direkt oder indirekt mit der Verschlussplatte und/oder dem Gehäuseabschnitt zu koppeln.

Gemäß einem weiteren Aspekt der Erfindung wird eine elektrochemische Zelle bereitgestellt, welche mindestens eine erfindungsgemäße Anordnung aufweist. Die elektrochemische Zelle kann beispielsweise als eine Batteriezelle in Form einer Lilonen-Zelle ausgestaltet sein.

Durch die Anordnung kann die Dichtung mechanisch entlastet bzw. "mechanisch überbrückt" werden. Insbesondere ermöglicht das Kopplungselement eine mechanische Entkopplung der Abdichtung des Spalts zwischen der Polkappe und der Verschlussplatte, da die Kräfte auf die Polkappe und die über das Kopplungselement auf die Verschlussplatte und das Gehäuse geleitet werden. Durch diese Maßnahme kann die Dichtung kräftefrei zwischen der Verschlussplatte und der Polkappe angeordnet werden, um eine Überlastung der Dichtung und ein daraus resultierendes Ablösen der Dichtung zu vermeiden.

Bei einer Druckbelastung der Polkappe wird das Kopplungselement direkt auf die Verschlussplatte gepresst, sodass die Polkappe nicht von der Verschlussplatte auseinandergezogen werden kann.

Das Kopplungselement kann beispielsweise direkt unterhalb der Kontaktierungsplatte, in einer Ausnehmung der Polkappe, an einem angeschweißten Abschnitt der Polkappe und dergleichen angeordnet werden.

Gemäß einem Ausführungsbeispiel ist eine Dichtung durch ein Spritzguss-Verfahren in den Spalt zwischen der Polkappe und der Verschlussplatte eingebracht oder die Dichtung ist in den Spalt zwischen der Polkappe und der Verschlussplatte hineingesetzt. Durch diese Maßnahme kann die Dichtung flexibel basierend auf unterschiedlichen technischen Verfahren in dem Spalt zwischen der Polkappe und der Verschlussplatte positioniert werden. Durch die Anordnung der Dichtung in dem Spalt oder ein Einbringen der Dichtung in den Spalt, beispielsweise durch ein Spritzguss-Verfahren, kann die Dichtung den Gehäuseabschnitt fluiddicht abschließen.

Bei einer weiteren Ausführungsform erstreckt sich das Kopplungselement zumindest bereichsweise in den umfangsseitig umlaufenden Spalt zwischen der Polkappe und der Verschlussplatte hinein, um den Gehäuseabschnitt fluiddicht abzuschließen. Durch diese Maßnahme kann das Kopplungselement neben der mechanischen Überbrückung auch die Abdichtung des Gehäuseabschnitts übernehmen. Dies kann beispielsweise durch eine Kombination der Dichtung mit dem Kopplungselement realisiert werden. Bei einer alternativen oder zusätzlichen Ausgestaltung kann das Kopplungselement durch ein Spritzguss-Verfahren sowohl in einen Bereich der Anordnung zwischen der Kontaktierungsplatte bzw. Polkappe und der Verschlussplatte als auch in den umlaufenden Spalt eingebracht werden.

Die mechanische Überbrückung durch das Kopplungselement kann die Sicherheit der elektrochemischen Zelle verbessern, wenn das Kopplungselement als ein elektrischer Isolator oder als ein hochohmiger Leiter ausgestaltet ist. Bei einer Ausgestaltung des Kopplungselements als ein hochohmiger Leiter kann ein Potential des Gehäuseabschnitts kontrolliert an das Potential einer Deckelbaugruppe bzw. der Polkappe angeglichen werden. Durch die hochohmige Ausgestaltung des Kopplungselements wird ein Fluss von hohen Strömen unterbunden. Das Material des Kopplungselements kann durch die gezielte Zugabe von leitfähigen Additiven, wie beispielsweise Ruß, hochohmig eingestellt werden.

Das Kopplungselement kann aus einem Kunststoff, Elastomer, Silikon und dergleichen bestehen.

Nach einer weiteren Ausführungsform weist die Dichtung einen zumindest bereichsweise ausgebildeten Überlappungsabschnitt auf, welcher radial und/oder axial über die Verschlussplatte zumindest bereichsweise hinausragt. Vorzugsweise ist das Kopplungselement dazu eingerichtet, die Kontaktierungsplatte oder die Polkappe indirekt über den Überlappungsabschnitt der Dichtung mechanisch mit der Verschlussplatte zu koppeln. Das Kopplungselement kann hierdurch auf dem Überlappungsabschnitt der Dichtung aufliegen.

Die eigentliche Dichtwirkung der Dichtung wird vorteilhafterweise nicht ausschließlich durch den Überlappungsabschnitt erzielt, sondern durch vom Überlappungsabschnitt beabstandete radiale und/oder axiale Dichtungsabschnitte bzw. Dichtflächen der Dichtung.

Vorteilhafterweise kann der Überlappungsabschnitt der Dichtung ebenfalls fertigungstechnische Toleranzen und Abweichungen ausgleichen und eine formschlüssige Anordnung des Kopplungselements ermöglichen.

Die Einschränkung der Flexibilität und der Beweglichkeit der federnden Abschnitte der Kontaktierungsplatte kann minimiert werden, wenn das Kopplungselement sich in Richtung der Kontaktierungsplatte verjüngt. Hierdurch werden mechanische Beeinträchtigungen von insbesondere seitlich abstehenden federnden Abschnitten der Kontaktierungsplatte reduziert.

Gemäß einem weiteren Ausführungsbeispiel weist die Polkappe zumindest bereichsweise eine seitlich umlaufende Nut oder Ausbuchtung auf. Vorteilhafterweise ist die Nut oder Ausbuchtung dazu eingerichtet, das Kopplungselement und/oder die Dichtung und/oder die Verschlussplatte aufzunehmen und relativ zueinander zu positionieren. Durch diese Maßnahme kann die Montage der elektrochemischen Zelle vereinfacht werden.

Darüber hinaus kann ein Randabschnitt der Nut oder die Ausbuchtung dazu dienen, das Kopplungselement einseitig zu stützen und somit eine Wechselwirkung des Kopplungselements mit der Kontaktierungsplatte vollständig zu eliminieren.

Die Anordnung kann technisch besonders einfach hergestellt werden, wenn ein Polkappenfuß der Polkappe nach einem Positionieren des Kopplungselements, der Dichtung und/oder der Verschlussplatte innerhalb der Nut oder an der Ausbuchtung zumindest bereichsweise verbiegbar oder bördelbar ist, um die direkt oder indirekte mechanische Kopplung zwischen der Polkappe und der Verschlussplatte auszubilden. Durch das Verbiegen oder Bördeln des Polkappenfußes wird ein Konterabschnitt zum Randabschnitt der Nut oder zur Ausbuchtung ausgebildet, welcher das Kopplungselement, die Dichtung und/oder die Verschlussplatte ortsfest positioniert.

Je nach Ausgestaltung kann die Verwendung der Verschlussplatte optional sein oder entfallen, wenn ein Gehäuseabschnitt der elektrochemischen Zelle einen stirnseitigen Abschnitt umfasst, welcher das Gehäusevolumen bereichsweise abschließt.

Nach einer weiteren Ausführungsform ist eine Druckplatte an einer der Verschlussplatte abgewandten Seite des Kopplungselements angeordnet, wobei die Druckplatte stoffschlüssig oder reibschlüssig oder formschlüssig mit der Polkappe verbunden ist. Alternativ zur Ausbildung einer Nut oder einer Ausbuchtung, welche bereits bei der Herstellung der Polkappe einzubringen sind, kann nachträglich die Druckplatte radial von der Polkappe abstehend an dieser positioniert werden.

Die Druckplatte kann die Polkappe vollständig umgreifen oder bereichsweise die Polkappe umgreifen bzw. aus mehreren Druckplatten-Segmenten bestehen, die voneinander beabstandet sind. Durch die Verwendung der Druckplatte kann die Herstellung der Anordnung weiter vereinfacht werden.

Die Druckplatte kann beispielsweise durch Laserschweißen, Reibschweißen oder plastische Verformung mit der Polkappe mechanisch gekoppelt werden. Im Vorfeld können das Kopplungselement, die Dichtung und die Verschlussplatte an der Polkappe positioniert werden. Dies ermöglicht eine skalierbare und automatisierte Herstellung der Anordnung.

Des Weiteren kann die Druckplatte vor einem Verbinden mit der Polkappe vorgespannt werden, um beispielsweise eine verbesserte Dichtwirkung zwischen der Verschlussplatte, der Dichtung und der Polkappe zu erzielen.

Gemäß einem weiteren Ausführungsbeispiel ist das Kopplungselement dazu eingerichtet, die Polkappe mechanisch indirekt über die Druckplatte und/oder die Dichtung mit der Verschlussplatte zu koppeln. Eine indirekte Verbindung über die Dichtung kann hierbei mittels eines Überlappungsabschnitts der Dichtung erfolgen. Die Druckplatte fungiert hierbei als eine axiale oder stirnseitige Begrenzung und leitet die auf die Polkappe wirkenden Kräfte weiter auf das Kopplungselement und anschließend auf den Gehäuseabschnitt oder die Verschlussplatte.

Das Kopplungselement kann vielseitig ausgestaltet und an unterschiedliche Geometrien von elektrochemischen Zellen angepasst sein, wenn das Kopplungselement als eine Scheibe mit einem runden, abgerundeten oder rechteckigen Querschnitt ausgestaltet ist.

Nach einer weiteren Ausführungsform berührt das Kopplungselement über eine gesamte Umfangslänge die Kontaktierungsplatte oder die Polkappe direkt oder indirekt. Alternativ berührt das Kopplungselement die Kontaktierungsplatte oder die Polkappe bereichsweise entlang der Umfangslänge direkt oder indirekt. Durch diese Maßnahmen kann die durch das Kopplungselement übertragene Druckverteilung flexibel angepasst werden. Neben einer flächigen Druckverteilung kann eine Vielzahl von punktförmigen Berührungspunkten vorteilhaft sein, insbesondere um minimale Fertigungstoleranzen auszugleichen und eine Vorspannung des Kopplungselements zu erzielen.

Nachstehend werden mehrere Ausführungsbeispiele der Erfindung anhand der Zeichnungen näher erläutert. Es zeigen:
Fig. 1 eine Schnittdarstellung einer elektrochemischen Zelle gemäß einer Ausführungsform der Erfindung,
Fig. 2 eine schematische Detailansicht zum Veranschaulichen einer Anordnung für eine elektrochemische Zelle gemäß einer zweiten Ausführungsform,
Fig. 3 eine schematische Detailansicht zum Veranschaulichen einer Anordnung für eine elektrochemische Zelle gemäß einer dritten Ausführungsform,
Fig. 4 eine schematische Detailansicht zum Veranschaulichen einer Anordnung für eine elektrochemische Zelle gemäß einer vierten Ausführungsform, und
Fig. 5 eine schematische Detailansicht zum Veranschaulichen einer Anordnung für eine elektrochemische Zelle gemäß einer fünften Ausführungsform.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

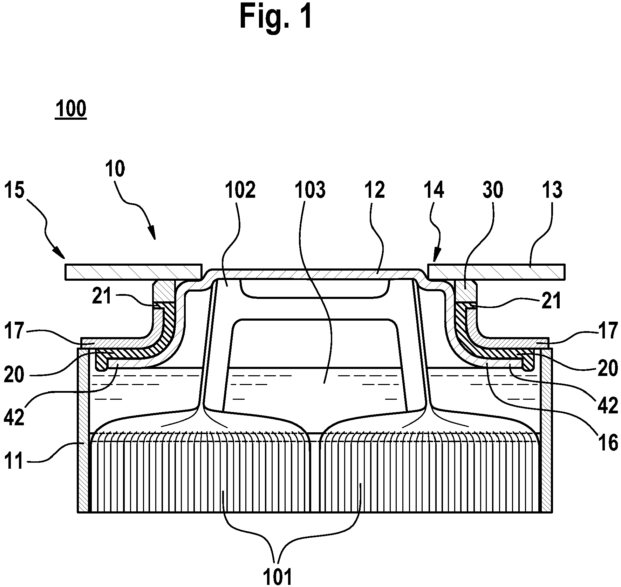

Die Fig. 1 zeigt eine Schnittdarstellung einer Batteriezelle bzw. einer elektrochemischen Zelle 100 gemäß einer Ausführungsform der Erfindung. Insbesondere wird eine Detailansicht einer Stirnseite der elektrochemischen Zelle 100 dargestellt. Die elektrochemische Zelle 100 kann beispielsweise als eine Lithium-Ionen-Zelle ausgestaltet sein. Die elektrochemische Zelle 100 weist im Bereich der Stirnseite bzw. an einem oder mehreren Polen eine Anordnung 10 auf, die im Folgenden näher erläutert wird. In der Fig. 1 weist die elektrochemische Zelle 100 eine Anordnung 10 gemäß einer ersten Ausführungsform.

Je nach Ausgestaltung kann die Anordnung 10 einen stirnseitigen Abschnitt der elektrochemischen Zelle 100 ausbilden. Zwei derartige Anordnungen 10, die einander gegenüberliegend angeordnet und im Bereich von Gehäuseabschnitten 11 miteinander verbunden sind, können beispielsweise eine elektrochemische Zelle 100 ohne interne Zellkomponenten, wie beispielsweise Zellstacks 101, Ableiter 102 und Elektrolytlösung 103, ausbilden.

Die Anordnung 10 weist einen endseitigen bzw. stirnseitigen Gehäuseabschnitt 11 der elektrochemischen Zelle 100 auf, in welchem eine Polkappe 12 mit mindestens einer Kontaktierungsplatte 13 angeordnet ist. Im dargestellten Ausführungsbeispiel ist eine ringförmige Kontaktierungsplatte 13 vorgesehen. Die Kontaktierungsplatte 13 ist randseitig oder umlaufend auf einer Stirnseite der Polkappe 12 positioniert. Darüber hinaus ist die Kontaktierungsplatte 13 mechanisch und elektrisch mit der Polkappe 12 verbunden.

Die Kontaktierungsplatte 13 ist an einem Überlappungsabschnitt 14 mit der Polkappe 12 verbunden. Des Weiteren weist die Kontaktierungsplatte 13 federnde Abschnitte 15 auf, welche seitlich bzw. radial und/oder umfangsseitig abstehen.

Die Polkappe 12 ist an einem Polkappenfuß 16 durch eine umlaufende Verschlussplatte 17 zumindest bereichsweise gegenüber dem Gehäuseabschnitt 11 arretiert. Zwischen der Polkappe 12 und der Verschlussplatte 17 ist ein umlaufender Spalt ausgebildet, in welchem eine Dichtung 20 angeordnet ist. Die Dichtung 20 ist im dargestellten Ausführungsbeispiel durch ein Spritzgussverfahren in den Spalt eingebracht. Die Dichtung 20 schließt den Gehäuseabschnitt 11 fluiddicht gegenüber der Polkappe 12 ab.

Im dargestellten Ausführungsbeispiel weist die Anordnung 10 ein Kopplungselement 30 auf, welches zwischen der Kontaktierungsplatte 13 und der Verschlussplatte 17 angeordnet ist. Dabei ist das Kopplungselement 30 als ein umlaufender Ring ausgestaltet, welches die, beispielsweise runde Polkappe 12, vollständig umgreift und bereichsweise gegen die Kontaktierungsplatte 13 gelehnt ist. An einer den federnden Abschnitten 15 der Kontaktierungsplatte 13 gerichteten Seite ist das Kopplungselement 30 abgeschrägt bzw. abgeflacht ausgebildet, um die Beweglichkeit der federnden Abschnitte 15 der Kontaktierungsplatte 13 nicht zu beeinträchtigen.

Die Dichtung 20 weist einen radial abstehenden Überlappungsabschnitt 21 auf, gegen welchen das Kopplungselement 30 angelehnt ist. Der Überlappungsabschnitt 21 überlappt hierbei die Verschlussplatte 17 und leitet somit die von der Polkappe 12 und/oder der Kontaktierungsplatte 13 aufgenommenen Kräfte weiter auf die Verschlussplatte 17 und den Gehäuseabschnitt 11. Die Dichtung 20 bzw. ein dichtender Teil der Dichtung 20 zwischen der Verschlussplatte 17 und der Polkappe 12 kann durch diese Maßnahme kräftefrei verbleiben, wodurch die Dichtwirkung mit zunehmender Belastung unverändert bleibt.

Durch die Kopplung der Polkappe 12 und/oder der Kontaktierungsplatte 13 mit der Verschlussplatte 17 über das Kopplungselement 30 wird die Dichtung 20 mechanisch entkoppelt bzw. mechanisch überbrückt.

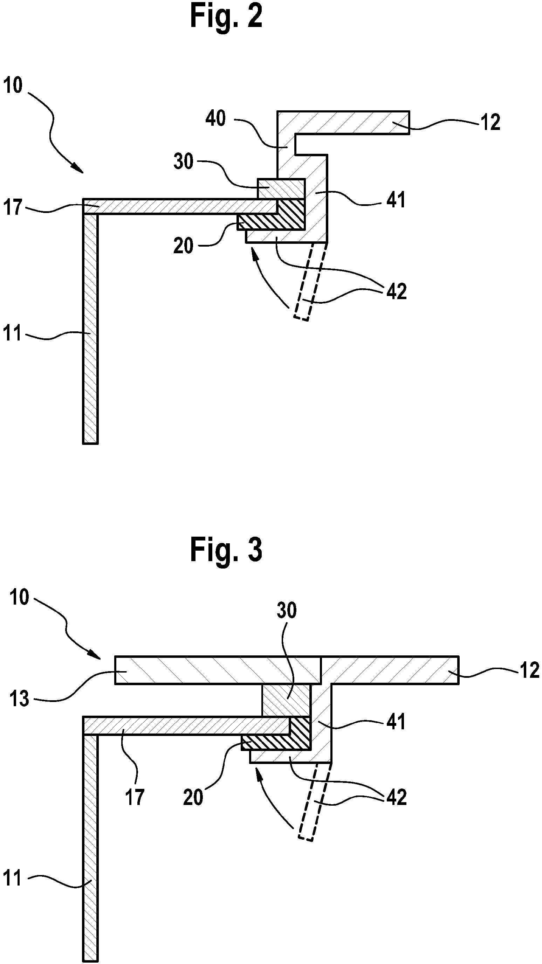

Die Fig. 2 zeigt eine schematische Detailansicht zum Veranschaulichen einer Anordnung 10 für eine elektrochemische Zelle 100 gemäß einer zweiten Ausführungsform. Im Unterschied zum in Fig. 1 dargestellten Ausführungsbeispiel weist die Polkappe 12 zumindest bereichsweise eine seitlich umlaufende Nut oder Ausbuchtung auf. Im dargestellten Ausführungsbeispiel ist eine Ausbuchtung 40 vorgesehen, welche zum Positionieren des Kopplungselements 30, der Verschlussplatte 17 und der Dichtung 20 fungiert.

Die Ausbuchtung 40 fungiert als ein Randabschnitt einer Nut 41, in welche das Kopplungselement 30, die Verschlussplatte 17 und die Dichtung 20 eingesetzt sind. Zum vollständigen Ausbilden der Nut 41 wird ein Polkappenfuß 42 der Polkappe 12 verbogen bzw. gebördelt. Dies wird durch den Pfeil veranschaulicht. Durch das Verbiegen oder Bördeln des Polkappenfußes 42 wird ein Konterabschnitt 42 zum Randabschnitt der Nut 41 oder zur Ausbuchtung 40 ausgebildet, welcher das Kopplungselement 30, die Dichtung 20 und/oder die Verschlussplatte 17 ortsfest positioniert.

Im dargestellten Ausführungsbeispiel wird durch das Kopplungselement 30 eine direkte mechanische Verbindung zwischen der Verschlussplatte 17 und der Polkappe 12 mittels der Ausbuchtung 40 hergestellt. Die Dichtung 20 wird somit nicht belastet. Die Kontaktierungsplatte 13 ist hier der Übersicht halber nicht dargestellt, wird jedoch durch das Kopplungselement 30 nicht beeinträchtigt.

In der Fig. 3 ist eine schematische Detailansicht zum Veranschaulichen einer Anordnung 10 für eine elektrochemische Zelle 100 gemäß einer dritten Ausführungsform gezeigt. Im Unterschied zum in Fig. 2 gezeigten Ausführungsbeispiel, wird die Nut 41 zwischen der Kontaktierungsplatte 13 und dem umgebogenen Polkappenfuß 42 der Polkappe 12 ausgebildet. Das Umbiegen des Polkappenfußes 42 kann hier in einem ersten Schritt erfolgen. Nach einem Befestigen der Kontaktierungsplatte 13, beispielsweise durch Schweißen, werden das Kopplungselement 30, die Verschlussplatte 17 und die Dichtung 20 ortsfest arretiert.

Das Kopplungselement 30 kann in den dargestellten Ausführungsbeispielen elastisch oder starr ausgestaltet sein. Vorteilhafterweise kann das Kopplungselement 30 als ein elektrischer Isolator fungieren, um den Gehäuseabschnitt 11 elektrisch von der Polkappe 12 zu trennen.

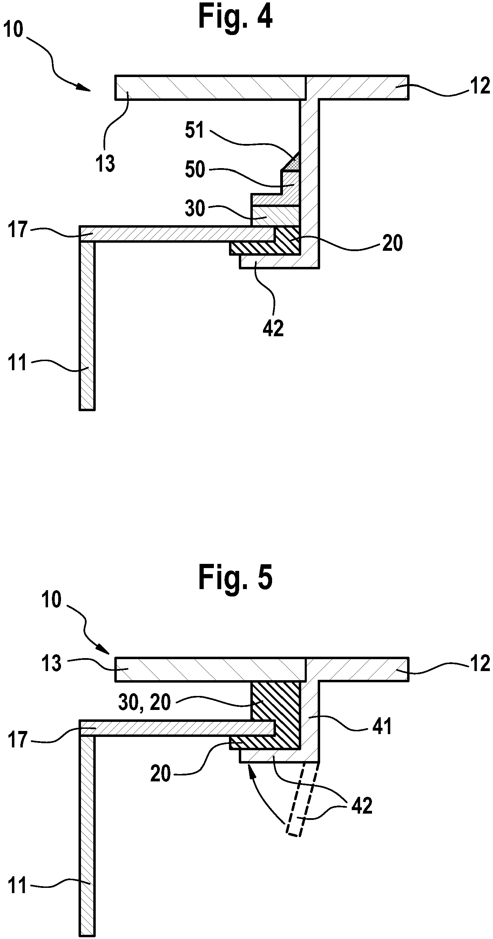

Die Fig. 4 zeigt eine schematische Detailansicht zum Veranschaulichen einer Anordnung 10 für eine elektrochemische Zelle 100 gemäß einer vierten Ausführungsform. Im Unterschied zu den bereits beschriebenen Ausführungsbeispielen ist hier eine Druckplatte 50 vorgesehen. Die Druckplatte 50 kann an einem Abschnitt der Polkappe 12 direkt oder mit Hilfe von Schweißpunkten 51 befestigt werden. Die Druckplatte 50 fungiert analog zu der Ausbuchtung 40 als ein randseitiger Halteabschnitt für das Kopplungselement 30, die Verschlussplatte 17 und die Dichtung 20 und steht radial von der Polkappe 12 ab.

Die Druckplatte 50 kann die Polkappe 12 vollständig umgreifen oder bereichsweise die Polkappe 12 umgreifen bzw. aus mehreren Druckplatten-Segmenten bestehen, die voneinander beabstandet sind.

Die Druckplatte 50 kann beispielsweise durch Laserschweißen, Reibschweißen oder plastische Verformung mit der Polkappe mechanisch gekoppelt werden. Im Vorfeld können das Kopplungselement 30, die Dichtung 20 und die Verschlussplatte 17 an der Polkappe 12 positioniert werden.

In der Fig. 5 ist eine weitere schematische Detailansicht zum Veranschaulichen einer Anordnung 10 für eine elektrochemische Zelle 100 gemäß einer fünften Ausführungsform gezeigt. Im Unterschied zu den bereits gezeigten Ausführungsformen fungiert das Kopplungselement 30 zusätzlich als eine Dichtung 20. Somit kann das Kopplungselement 30 die mechanische Entkopplung bzw. Überbrückung der Kontaktierungsplatte 13 und/oder der Polkappe 12 und den fluiddichten Abschluss des Gehäuseabschnitts 11 gegenüber einer Umgebung ermöglichen.

## Patentansprüche

1. Anordnung (10), insbesondere eine Polanordnung einer elektrochemischen Zelle (100), aufweisend einen endseitigen Gehäuseabschnitt (11), in welchem eine Polkappe (12) mit einer mindestens einer Kontaktierungsplatte (13) angeordnet ist, wobei die Polkappe (12) an einem Polkappenfuß (42) durch eine umlaufende Verschlussplatte (17) zumindest bereichsweise gegenüber dem Gehäuseabschnitt (11) arretiert ist, wobei zwischen der Polkappe (12) und der Verschlussplatte (17) ein umlaufender Spalt ausgebildet ist, welcher abgedichtet ist, **dadurch gekennzeichnet, dass** die Anordnung (10) ein Kopplungselement (30) aufweist, welches dazu eingerichtet ist, die mindestens eine Kontaktierungsplatte (13) und/oder die Polkappe (12) mechanisch direkt oder indirekt mit der Verschlussplatte (17) und/oder dem Gehäuseabschnitt (11) zu koppeln.

2. Anordnung nach Anspruch 1, wobei eine Dichtung (20) durch ein Spritzguss-Verfahren in den Spalt zwischen der Polkappe (12) und der Verschlussplatte (17) eingebracht ist oder die Dichtung (20) in den Spalt zwischen der Polkappe (12) und der Verschlussplatte (17), insbesondere durch Kleben, hineingesetzt ist.

3. Anordnung nach Anspruch 1, wobei das Kopplungselement (30) sich zumindest bereichsweise in den Spalt zwischen der Polkappe (12) und der Verschlussplatte (17) hinein erstreckt, um den Gehäuseabschnitt (11) fluiddicht abzuschließen.

4. Anordnung nach einem der Ansprüche 1 bis 3, wobei das Kopplungselement (30) als ein elektrischer Isolator oder als ein hochohmiger Leiter ausgestaltet ist.

5. Anordnung nach einem der Ansprüche 1 bis 4, wobei die Dichtung (20) einen zumindest bereichsweise ausgebildeten Überlappungsabschnitt (21) aufweist, welcher radial und/oder axial über die Verschlussplatte (17) zumindest bereichsweise hinausragt, wobei das Kopplungselement (30) dazu eingerichtet ist, die Kontaktierungsplatte (17) oder die Polkappe (12) indirekt über den Überlappungsabschnitt (21) der Dichtung (20) mechanisch mit der Verschlussplatte (17) und/oder dem Gehäuseabschnitt (11) zu koppeln.

6. Anordnung nach einem der Ansprüche 1 bis 5, wobei das Kopplungselement (30) sich in Richtung der Kontaktierungsplatte (13) verjüngt.

7. Anordnung nach einem der Ansprüche 1 bis 6, wobei die Polkappe (12) zumindest bereichsweise eine seitlich umlaufende Nut (41) oder Ausbuchtung (40) aufweist, wobei die Nut (41) oder die Ausbuchtung (40) dazu eingerichtet ist, das Kopplungselement (30), die Dichtung (20) und/oder die Verschlussplatte (17) aufzunehmen und relativ zueinander zu positionieren.

8. Anordnung nach Anspruch 7, wobei ein Polkappenfuß (42) der Polkappe (12) nach einem Positionieren des Kopplungselements (30), der Dichtung (20) und/oder der Verschlussplatte (17) innerhalb der Nut (41) oder an der Ausbuchtung (40) zumindest bereichsweise verbiegbar oder bördelbar ist, um die direkt oder indirekte mechanische Kopplung zwischen der Polkappe (12) und der Verschlussplatte (17) auszubilden.

9. Anordnung nach einem der Ansprüche 1 bis 8, wobei eine Druckplatte (50) an einer der Verschlussplatte (17) abgewandten Seite des Kopplungselements (30) angeordnet ist, wobei die Druckplatte (50) stoffschlüssig oder reibschlüssig oder formschlüssig mit der Polkappe (12) verbunden ist.

10. Anordnung nach Anspruch 9, wobei das Kopplungselement (30) dazu eingerichtet ist, die Polkappe (12) mechanisch indirekt über die Druckplatte (50) und/oder die Dichtung (20) mit der Verschlussplatte (17) zu koppeln.

11. Anordnung nach einem der Ansprüche 1 bis 10, wobei das Kopplungselement (30) als eine Scheibe mit einem runden, abgerundeten oder rechteckigen Querschnitt ausgestaltet ist.

12. Anordnung nach einem der Ansprüche 1 bis 11, wobei das Kopplungselement (30) über eine gesamte Umfangslänge die Kontaktierungsplatte (13) oder die Polkappe (12) direkt oder indirekt berührt, oder wobei das Kopplungselement (30) die Kontaktierungsplatte (13) oder die Polkappe (12) bereichsweise entlang der Umfangslänge direkt oder indirekt berührt.

13. Elektrochemische Zelle (100), aufweisend mindestens eine Anordnung (10) gemäß einem der vorhergehenden Ansprüche.
